# EUROPÄISCHE PATENTSCHRIFT

(11) **EP 3 303 228 B1**
(45) Veröffentlichungstag und Bekanntmachung des Hinweises auf die Patenterteilung: **09.11.2022**
(21) Anmeldenummer: 16728625.1
(22) Anmeldetag: 20.05.2016
(51) Int. Cl.: C02F 1/44, B01D 61/36, B01D 63/08, C02F 1/04

(54) **ANORDNUNG FÜR DIE BEREITSTELLUNG VON KEIMFREIEM WASSER FÜR INJEKTIONSZWECKE**
ARRANGEMENT FOR PROVIDING STERILE WATER FOR INJECTION PURPOSES
SYSTÈME POUR PRÉPARER DE L'EAU STÉRILE INJECTABLE

(30) Priorität: 08.06.2015 DE 102015210419; 19.05.2016 DE 102016208571
(43) Veröffentlichungstag der Anmeldung: 11.04.2018
(73) Patentinhaber: Pharmatec GmbH, 01099 Dresden (DE)
(72) Erfinder: VON PAPEN, Michael, 01099 Dresden (DE); DAEMMIG, Daniel, 01640 Coswig (DE); KRETZSCHMAR, Ralf, 01309 Dresden (DE); SIMON, Stephan, 01309 Dresden (DE)
(74) Vertreter: DREISS Patentanwälte PartG mbB
(86) Internationale Anmeldenummer: PCT/EP2016/061396
(87) Internationale Veröffentlichungsnummer: WO 2016/198251

(56) Entgegenhaltungen:
- EP-A2- 0 094 543
- WO-A1-2014/058309
- DE-A1-102009 020 128
- US-A- 4 610 790
- US-A- 4 953 694

## Beschreibung

Die Erfindung betrifft eine Anordnung für die Bereitstellung von keimfreiem Wasser für Injektionszwecke. Dabei kann keimfreies Wasser aus Trinkwasser gewonnen und in der Medizin eingesetzt werden.

Bisher ist es üblich, bei der Produktion von Wasser für Injektionszwecke (WFI) gereinigtes Wasser auf eine Temperatur oberhalb der Siedetemperatur zu erwärmen und den so erhaltenen Wasserdampf bei einer Reduzierung der Temperatur zu kondensieren. Das Kondensat kann für Injektionszwecke eingesetzt werden. Um die geforderte Sterilität des Produkts zu gewährleisten, müssen bei der Herstellung industrieller Mengen WFI mit dem bisher im Stand der Technik beschriebenen Verfahren große Mengen Energie aufgewandt werden.

Aus der DE 10 2004 030 529 A1 sind bereits ein Verfahren und eine Vorrichtung zur Destillation von Lösungen bekannt. Ein Flüssigkeitsstrom strömt durch eine aus dampf- und wasserdichten Hohlfäden bestehende Kondensationseinheit. Beim Strömen durch einen Wärmetauscher wird der Flüssigkeitsstrom anschließend auf eine obere Prozesstemperatur erhitzt und tritt anschließend in eine aus mikroporösen und hydrophoben Hohlfäden bestehende Verdampfereinheit ein. Mit einer Vakuumpumpe wird ein Unterdruck im Dampfraum erzeugt, der sich zumindest teilweise dem Siedetemperaturverlauf des Flüssigkeitsstroms in der Verdampfereinheit annähert und teilweise unterschreitet. Das sich bildende Destillat wird abgepumpt. Die Anlage dient insbesondere der Erzeugung von Frischwasser aus Meer-oder Brackwasser. Aus der EP 2 427 263 A1 ist ein ähnliches System mit modularem Aufbau bekannt. Aus der EP 0 094 543 A2 ist ein Verfahren zur Transmembrandestillation bekannt.

Weiterhin ist aus der US 4 610 790 A ein Verfahren zum Herstellen von Wasser für Injektionszwecke bekannt, mit welchem Trinkwasser mehrstufig gefiltert wird.

Es ist Aufgabe der Erfindung, keimfreies Wasser für Injektionszwecke mit reduziertem Energiebedarf in industriellem Maßstab herstellen zu können.

### Vorteile der Erfindung

Erfindungsgemäß wird diese Aufgabe mit einer Anordnung, die die Merkmale des Anspruchs 1 aufweist, gelöst. Diese Anordnung zeichnet sich durch einen verringerten Energiebedarf aus. Aufgrund einer durch den vorherrschenden Unterdruck verringerten Siedetemperatur wird es möglich, für das Betreiben der Anlage auch beispielsweise Abwärme anderer Maschinen zu verwenden.

Vorteilhafte Ausgestaltungen und Weiterbildungen können mit in untergeordneten Ansprüchen bezeichneten Merkmalen realisiert werden.

Die Erfindung baut auf dem an sich bekannten Prinzip der Membrandestillation auf. Die erfindungsgemäße Anordnung ist dazu so ausgebildet, dass eine Einrichtung für die Einhaltung eines unterhalb des Atmosphärendrucks liegenden Innendrucks in einer Kammer zur Unterschreitung des Siededampfdruckes von Trinkwasser einer bestimmten Temperatur, eine Einrichtung zur Erwärmung des Trinkwassers bis oberhalb der herabgesetzten Siedetemperatur innerhalb der Kammer sowie eine elektronische Steuerung vorhanden sind. Die Einrichtung zur Erwärmung von Trinkwasser kann bevorzugt elektrisch, aber auch mit einem anderen Energieträger betrieben werden. Es kann dabei sogar solare Energie vollständig oder als Solarenergieunterstützung genutzt werden. Bei der Erwärmung sollte im normalen Betrieb eine Temperatur des Trinkwassers von mindestens 50 °C erreicht werden.

Die Einrichtung zur Erwärmung des Trinkwassers wird so betrieben, dass das Trinkwasser bis oberhalb der herabgesetzten Siedetemperatur innerhalb der Kammer erwärmt wird. Entsprechend stellt die Einrichtung für die Einhaltung eines Innendrucks in der Kammer einen geeigneten Druck ein, der sich zur Unterschreitung des Siededampfdruckes von Trinkwasser bei einer bestimmten Temperatur besonders eignet.

Eine Einrichtung zur Einhaltung eines Druckes unterhalb des Atmosphärendrucks kann eine Vakuumpumpe sein, mit der der Druck in der Kammer unter den in der Umgebung herrschenden Atmosphärendruck abgesenkt werden kann. Der Innendruck in der Kammer sollte auf einen Druck im Bereich zwischen 450 mbar und 500 mbar abgesenkt werden. Mit diesem reduzierten Innendruck ergibt sich eine entsprechend reduzierte

Siedetemperatur von Wasser. So könnte Wasserdampf bereits bei Temperaturen um bzw. unterhalb von 80 °C vorliegen.

Innerhalb der Kammer kann ausgehend von einer Seite ein Druckgefälle eingehalten sein, so dass ausgehend von der Seite, an der Trinkwasser zugeführt wird, in Richtung der entgegengesetzt dazu angeordneten Seite eine Reduzierung des Innendrucks eingehalten ist. Dadurch kann nicht nur eine Strömung des Trinkwassers in dieser Richtung erreicht werden, sondern auch die in diese Richtung verringernde Siedetemperatur wegen des graduell reduzierten Innendrucks vorteilhaft ausgenutzt werden. Das eingespeiste Trinkwasser wird innerhalb der Anlage mittels Heizdampf, der innerhalb der Anlage in einem Dampferzeuger bereitgestellt wird, über den Austausch von Kondensationswärme erwärmt. Dies erfolgt bei einem Unterdruck von ca. 500 mbar.

In der Kammer sind mindestens eine für Flüssigkeit durchlässige Membran und in einem Abstand zur Membran eine Folie oder Platte angeordnet. An der Platte oder Folie kondensiert Wasserdampf, der durch die Membran permeiert ist. Dabei werden Partikel, Keime, flüssiges Wasser und nicht gasförmige Bestandteile durch die Membran vom dampfförmigen Wasser getrennt. Das erwärmte Wasser fließt in einem sogenannten Feedspalt zwischen einer Membran und einer Folie. Wasserdampf kondensiert an der Folie und überträgt die freiwerdende Kondensationswärme an das Wasser der anderen Seite der Folie. Dadurch wird ein Teil des Wassers dank des Druckgradienten an der Membran verdampft und gelangt so in den Dampfkanal. Hier wird es auf die Folien des nächsten Effekts (Anordnung Membran und Folie) geleitet und kondensiert hier zu WFI unter Abgabe der Kondensationswärme an das Speisewasser auf der anderen Seite der Folie. Durch diesen repetitiven Aufbau ergibt sich ein hoher Wirkungsgrad.

In einem ersten Effekt, dem sogenannten Dampferzeuger, wird von außen erwärmtes Heizwasser, vorzugsweise enthärtetes Wasser, in die Kammer aus Leerrahmen und Membranen eingeleitet, an welchen ein Druck niedriger als der Siededampfdruck des Heizwassers anliegt. An der Grenzfläche zu den Membranen verdampftes Heizwasser wird über einen angelegten Druckgradient auf die Dampfseite der Folien des ersten Effekts geleitet. An deren anderer Seite wird das kalte Speise-/Trinkwasser geleitet. Durch die Kondensation des Dampfes an der Folie wird Kondensationswärme an das Speisewasser übertragen, bis dieses die durch den anliegenden Unterdruck verringerte Siedetemperatur erreicht und teilweise durch die der Folie gegenüberliegende Membran verdampft. Das Kondensat des Heizdampfs wird dem Heizkreislauf vollständig zugeführt.

Eine Membran und eine Folie oder Platte bzw. Kondensationsfläche bilden dabei einen sogenannten Effekt. Jede Membran, Folie und/oder ein sogenannter Spacer sitzen in einem Rahmen. Bei einem funktionalen Zusammenschluss von mehreren Membran-, Spacer-(Platten-) und Folienrahmen spricht man von einem Effekt. Der funktionale Zusammenschluss mehrere Effekte (Dampferzeuger und/oder Kondensator eingeschlossen) ergeben ein Modul. In einem Dampferzeuger befinden sich beispielsweise nur Membranen und Spacer. In einem Kondensator befinden sich nur Folien und Spacer. Eine Folie oder Platte kann gekühlt werden, wodurch die Kondensation unterstützt wird. Dazu kann kälteres Wasser der der Membran eines Effekts abgewandten Oberfläche einer Folie oder Platte oder durch darin ausgebildete Kanäle zugeführt werden. Bei diesem Wasser kann es sich zumindest teilweise um Trinkwasser handeln, das dabei auf eine Temperatur oberhalb der auf der Dampfseite herabgesetzten Siedetemperatur erwärmt und mindestens einer Membran an der der jeweiligen Folie oder Platte abgewandten Oberfläche zugeführt wird. Dadurch wird an der Grenzfläche von Speisewasser und Membran der Siededampfdruck des Speisewassers unterschritten und ein Dampfdurchtritt durch die hydrophobe Membran erreicht, welche die flüssige und die gasförmige Phase voneinander trennt. Unmittelbar hinter der Membran kondensiertes Wasser wird über eine Drainage verworfen. Der erhaltene Reindampf wird über Dampfkanäle auf eine Anordnung von Folien/Platten geleitet, wo es zur Kondensation des Reindampfes zu WFI kommt. Die dabei freiwerdende Kondensationswärme wird genutzt, um auf der anderen Seite der Folie fließendes Speisewasser bis zur herabgesetzten Siedetemperatur zu erwärmen. Die Bewegung des Reindampfes erfolgt durch einen Unterdruckgradient in Richtung steigender Effektzahl, welcher von einer Vakuumerzeugung aufrechterhalten wird. Um eine vollständige Reindampfab- scheidung zu gewährleisten, wird der Reindampf vor Verlassen des Systems auf eine Anordnung wassergekühlter Folien, dem Kondensator, geleitet, wo noch enthaltener Reindampf nahezu vollständig zu WFI kondensiert wird.

Das kondensierte Wasser wird aus der Kammer über einen Abfluss als keimfreies Wasser für Injektionszwecke WFI entfernt. Dabei kann es in einen externen Sammelbehälter überführt und aus diesem einem Weitertransport oder einer Portionierung in für eine Anwendung geeignete Teilvolumina zugeführt werden. Über eine am WFI- Behälter angebrachte Leitung kann das gewonnene WFI zum Zwecke der Heißlagerung einem Wärmekreislauf zugeführt werden, wodurch eine über die elektronische Steuerung regelbare Aufheizung erreicht wird. Eine weitere Leitung ermöglicht eine Rückführung heißen WFIs in die Module, um eine Aufheizung/Heißwassersanitisierung des Systems auf/bei eine/einer Temperatur von mindestens 85°C zu gewährleisten.

Zusätzlich ist eine elektronische Steuerung vorhanden, mit der zumindest die Temperatur des auf oberhalb der in der Kammer verringerten Siedetemperatur erwärmten Trinkwassers beeinflusst werden kann. Erfindungsgemäß ist die elektronische Steuerung so ausgebildet, dass vor jeder Inbetriebnahme und/oder in vorgebbaren Zeitabständen eine Erwärmung der gesamten Anordnung im Inneren der Kammer auf eine Temperatur von mindestens 85 °C erreichbar ist. Damit kann absolute Keimfreiheit und Sterilität des mit der Anordnung bereit gestellten Wassers für Injektionszwecke eingehalten werden.

Geeignete hydrophobe Materialien, die für den Einsatz als Membran geeignet sind, sind aus dem Stand der Technik prinzipiell bekannt.

Vorteilhaft können mehrere Effekte in einer Reihenanordnung in der Kammer vorhanden sein. Diese können dabei bevorzugt als mehrere Reihenanordnungen von Effekten hintereinander angeordnet sein. Dadurch lässt sich der Flächenbedarf der Anordnung bei erhöhter Kapazität reduzieren. Eine Kammer wird durch dichtverschweißte Module gebildet. Beispielsweise handelt es sich um rechteckige Blöcke, welche von Kanälen durchzogen sind, in denen Unterdruck anliegt und alle Prozessschritte ablaufen.

Jeder Rahmen besteht aus einem funktionellen Element (Folie/Membran) und mehreren Teilvolumina, welche den Reindampf auf die Folien und das Speisewasser auf die Membranen leiten, das WFI und zu früh kondensierte Bestandteile (Drainage) abführen, das WFI auffangen und Inertgase abführen, sowie den dichten Abschluss der Effekte untereinander über anliegendes Vakuum ermöglichen. Diese Teilvolumina sollten getrennt voneinander sein, so dass eine Vermischung der unterschiedlichen Medien vermieden wird. Trinkwasser, welches unmittelbar an einer Membran und nicht an einer Folie kondensiert ist, kann über eine Drainage-Leitung verworfen werden.

Es kann an dem/den Abfluss/Abflüssen für WFI jeweils eine Rückführleitung angeschlossen sein, über den/die WFI während Zeiträumen, innerhalb derer eine auf mindestens 85 °C erhöhte Temperatur in der Kammer eingehalten ist, über ein Wärmeelement auf mindestens 85 °C aufgeheizt und den Modulen zurückgeführt werden kann. Rückgeführtes WFI, welches möglicherweise nicht mehr die Standards für Injektionszwecke erfüllt, kann über ein von der elektronischen Steuerung beeinflussbares Ventil, beispielsweise einem Zweiwegeventil, in das Abwasser verworfen werden.

Nach erfolgter Aufheizung des Kammerinneren auf eine Temperatur von mindestens 85 °C, die über einen Zeitraum von mindestens 60 min durchgeführt werden sollte, kann die elektronische Steuerung wieder einen normalen Betrieb bei etwas reduzierter Temperatur einleiten, bei dem falls vorhanden die Rückführleitung(en) wieder geschlossen sind.

Ein Sensor zur Bestimmung der Masse oder des Volumenstroms kann an und/oder in einem Abfluss eines Moduls angeordnet sein.

Bei mit einem Sensor detektiertem Unterschreiten oder Überschreiten eines vorgebbaren Schwellwertes zur Anzeige eines Defektes an einem Modul kann ein akustisches und/oder optisches Signal generiert werden. Es besteht aber auch die Möglichkeit, allein oder zusätzlich ein Warnsignal der elektronischen Steuerung zuzuführen. Dadurch kann in besonders kritischen Fällen eine sofortige vollständige Abschaltung erfolgen.

Zur weiteren Erhöhung der Betriebssicherheit kann in einem Abfluss, einer Sammelleitung oder einem internen Sammelbehälter, in dem/der ein Druck unterhalb des Atmosphärendrucks eingehalten ist, enthaltenes keimfreies Wasser für Injektionszwecke mittels einer Pumpe durch ein Filterelement in einen weiteren externen Sammelbehälter für keimfreies Wasser für Injektionszwecke, in dem Atmosphärendruck eingehalten ist, gefördert werden. Damit können ggf. im Wasser enthaltene Partikel aus diesem separiert werden, was insbesondere bei kritischen Betriebszuständen wie z.B. nach einer Erst- oder Wiederinbetriebnahme der Anordnung vorteilhaft sein kann.

Bei der erfindungsgemäßen Anordnung können mehrere Effekte bei der Zufuhr von Trinkwasser und/oder bei der Abfuhr von keimfreiem Wasser für Injektionszwecke parallel zueinander geschaltet sein. Bei den mehreren Effekten kann es sich um alle Effekte oder auch um mehrere Gruppen von Effekten handeln.

Trinkwasser kann so über eine gemeinsame Sammelleitung allen Modulen oder den Modulen einer Gruppe zugeführt werden. Bei der Abfuhr von keimfreiem für Injektionszwecke geeignetem Wasser können mehrere Abflüsse von Modulen für dieses Wasser in eine gemeinsame Sammelleitung münden.

Die Anordnung ist so ausgebildet, dass die Funktion der Membrane überwacht werden kann. Durch Beschädigungen in einer oder auch mehreren Membranen kann es zur Kontamination des keimfreien Wassers kommen. Um zu vermeiden, dass kontaminiertes Wasser als WFI genutzt wird, wird das durch Membrane permeierte WFI mindestens einer Prüfeinheit zugeführt, in der mindestens eine Messgröße überprüft wird, mit der eine Aussage über die Verunreinigung des Produkts mit Speisewasser und damit über die Integrität der Folien getroffen werden kann. Im Falle einer ungewollten Perforation in einer Membran kann flüssiges Speisewasser auf die Produktseite gelangen, wo es sich mit dem unmittelbar hinter der Membran natürlich anfallenden Drainagewasser vermischt. Eine Prüfeinheit in der Drainageleitung hinter jedem Modul erlaubt eine sensitive Bestimmung der Verunreinigung des Drainagewassers mit unverdampft durch die Membran getretenem Speisewasser. In den Prüfeinheiten wird die elektrische Leitfähigkeit oder der spezifische elektrische Widerstand überprüft. Da die elektrische Leitfähigkeit (der elektrische Widerstand) von mit Trinkwasser kontaminiertem WFI höher (niedriger) als der von reinem WFI ist, kann bei Über- oder Unterschreiten eines Schwellwertes der jeweiligen Messgröße ein akustisches und/oder optisches Signal generiert werden und das gesamte verunreinigte WFI durch die elektronische Steuerung gesteuert ins Abwasser verworfen werden. Somit kann eine Verunreinigung des WFI Sammelbehälters und des darin enthaltenen WFI vermieden werden. Diese Prüfung kann kontinuierlich oder auch sukzessive nach Ablauf vorgebbarer Zeitintervalle, stichprobenartig durchgeführt werden. Mehrere Prüfeinrichtungen können an Abläufen für keimfreies Wasser angeschlossen sein, wodurch eine konkretere Aussage erhalten werden kann, in welchem Effekt oder Bereich der Anordnung eine Membran defekt ist.

Ist ein Defekt erkannt worden, kann die Anordnung abgeschaltet werden.

Mit einer solchen Ausbildung der Anordnung können Defekte oder andere Probleme an einzelnen Effekten erkannt werden, so dass eine gezielte Wartung oder Reparatur einzelner Module möglich und keine vollständige Untersuchung der gesamten Anordnung erforderlich ist.

Nachfolgend soll die Erfindung exemplarisch näher erläutert werden.

Dabei zeigen:
Figur 1 ein Blockschaltbild eines Beispiels einer erfindungsgemäßen Anordnung im Normalbetrieb;
Figur 2 ein Blockschaltbild eines Beispiels einer erfindungsgemäßen Anordnung im Betrieb, so dass eine Erwärmung der gesamten Anordnung im Inneren der Kammer auf eine Temperatur von mindestens 85 °C erreichbar ist;
Figur 3 ein Blockschaltbild eines Beispiels einer erfindungsgemäßen Anordnung mit einer Prüfeinrichtung;
Figur 4 ein Prinzipschaltbild der Membrandestillation.

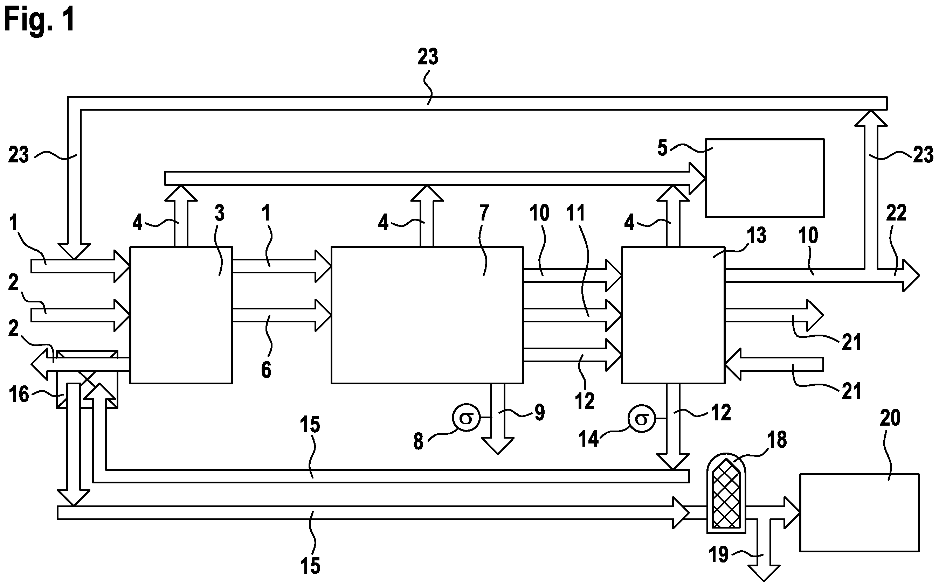

In Figur 1 ist ein Blockschaltbild eines Ausführungsbeispiels einer erfindungsgemäßen Anordnung im Normalbetrieb gezeigt. Dabei gelangt Trinkwasser als Speisewasser über eine Speisewasser-Leitung 1 in einen Dampferzeuger 3 für die Heizdampfbereitstellung. Der Dampferzeuger 3 erzeugt unter Unterdruck Heizdampf, welcher in einem ersten Effekt 34 das kalte Speisewasser erhitzt. Außerdem ist ein Heizkreislauf 2 vorgesehen, über den der Dampferzeuger 3 mit einem Heizmedium versorgt wird. Das Heizmedium wird durch ein Heizelement 16 erwärmt. Aus dem Dampferzeuger 3 gelangt Speisewasser über die Speisewasser-Leitung 1 und Heizdampf über eine Heizdampf-Leitung 6 an eine Einrichtung 7 zur Membrandestillation. Aus der Einrichtung 7 zur Membrandestillation gelangt Konzentrat über eine Konzentrat-Leitung 10, Reindampf über eine Reindampf-Leitung 11 sowie Destillat über eine Destillat-Leitung 12 an einen Kondensator 13. Außerdem wird Drainage über eine Drainage-Leitung 9 abgeführt. In der Drainage-Leitung 9 ist eine Messsonde bzw. ein Sensor 8 zur Ermittlung der elektrischen Leitfähigkeit und/oder des spezifischen elektrischen Widerstands der Drainage vorgesehen. Der Kondensator 13 ist mit einem Kühlkreislauf 21 verbunden. Aus dem Kondensator 13 gelangt über eine Destillat-Leitung 12 Destillat in eine Destillat-Rückleitung 15 zum Heizkreislauf 16, beispielsweise ein durch ein Heizmedium durchströmter Wärmetauscher. Das eventuell erwärmte Destillat wird wieder zurückgeführt an einen Filter 18 und gelangt schließlich als WFI in einen Lagertank 20 für das Destillat. Nach dem Filter 18 zweigt eine Verwurfleitung 19 für das Destillat ab. Aus dem Kondensator 13 wird außerdem über eine Konzentrat-Leitung 10 Konzentrat abgeführt. Die Konzentrat-Ableitung 10 verzweigt sich in eine Konzentrat-Ableitung 22, die in das Abwasser mündet, sowie in eine Rezirkulationsleitung 23 für das Konzentrat. Über die Rezirkulationsleitung 23 kann das Konzentrat über Speisewasser-Leitung 1 dem Dampferzeuger 3 zugeführt werden. Außerdem ist ein Vakuumerzeuger bzw. eine Vorrichtung 5 zur Vakuumerzeugung vorgesehen. Die Vorrichtung 5 zur Vakuumerzeugung ist über Vakuumsanschlüsse 4 mit dem Dampferzeuger 3 und/oder mit der Einrichtung 7 zur Membrandestillation und/oder mit dem Kondensator 13 verbunden. Wie bereits beschrieben wird zur Siedetemperaturabsenkung ein geeigneter Unterdruck in den entsprechenden Kammern 28 erzeugt. Die beschriebenen Komponenten werden zumindest teilweise für den sogenannten Destillatbetrieb benötigt. Im Normalbetrieb gelangt Trinkwasser als Speisewasser in die Einrichtung 7 zur Membrandestillation, mit der eine Erwärmung des Trinkwassers auf eine Temperatur oberhalb der innerhalb des Moduls herabgesetzten Siedetemperatur erreicht werden kann. An die gesamte Anordnung ist die Einrichtung 5 für die Einhaltung eines Druckes unterhalb des Atmosphärendrucks angeschlossen, so dass die Siedetemperatur des Speisewassers innerhalb des Systems über die Druckabhängigkeit der Siedetemperatur reduziert werden kann.

Auf der einen Seite der Membran 30 fließt das Speisewasser 1, auf der anderen Seite der Membran 30 liegt das Vakuum an. Dadurch wird an der Grenzfläche Membran-Speisewasser der Siededampfdruck des erhitzten Speisewassers unterschritten und es kommt zu Dampfdurchtritt durch die Membran 30. Aufgrund der hydrophoben Ausgestaltung der Membran 30 lässt diese nur Dampf durch und trennt so die Dampfphase von der flüssigen Phase. Der permeierte Wasserdampf kann an Kondensationsflächen wie beispielsweise Folien 32, die gekühlt werden können, kondensieren und als keimfreies Wasser über Leitungen 12 abgezogen und dann dem Sammelbehälter 20 zugeführt werden. Zur Kühlung eingesetztes Wasser kann über Zu- und Abläufe 21 im Kühlkreislauf der Kondensationseinheit 13 zugeführt werden. Reindampf, welcher bisher nicht an Folien 32 kondensiert ist, kann dadurch in einem letzten Prozessschritt nahezu vollständig zu WFI kondensiert werden.

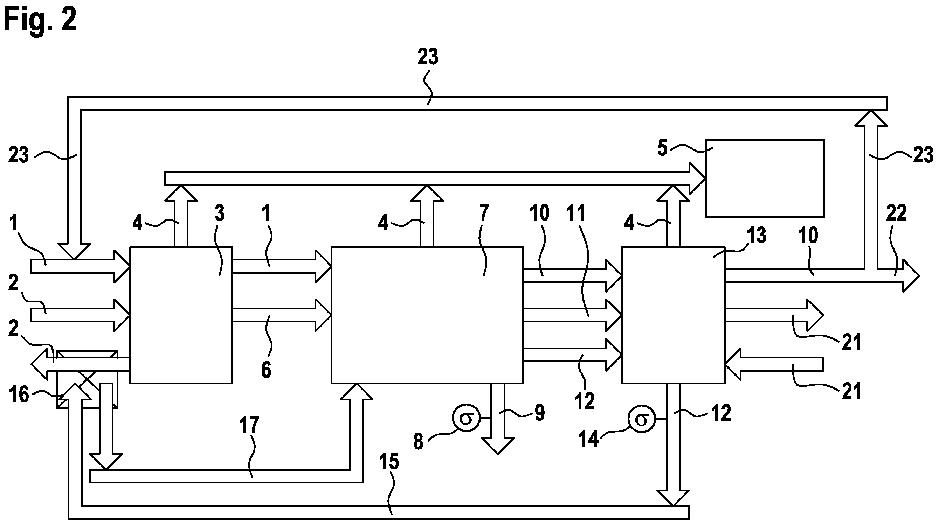

Figur 2 zeigt die zumindest teilweise benötigten Komponenten für die Betriebsart Heißwasser-Sanitisierung. Hierbei wird Destillat über die Leitung 15 dem Heizelement 16 zugeführt. Über eine Destillat-Rückleitung 17 wird das durch das Heizelement 16 erwärmte Destillat der Einrichtung 7 zur Membrandestillation zugeführt. In diesem Betriebsmodus unterbleibt die Rückführung des Destillats an den Filter 18 bzw. das Befüllen des Lagertanks 20 mit WFI.

Figur 2 zeigt den Betriebsmodus, bei dem innerhalb der Anordnung eine auf mindestens 85 °C erhöhte Temperatur vorzugsweise für einen Zeitraum von 60-90 min eingehalten wird. Es ist erkennbar, dass der WFI Sammelbehälter 20 abgetrennt wurde und das gesamte Produkt bzw. Destillat über das Heizelement 16 auf eine Temperatur von mindestens 85°C aufgeheizt und über die Rückleitung 17 in die Einrichtung 7 zur Membrandestillation einspeisbar ist. Dadurch wird die Heißwassersanitisierung der Anlage bei mindestens 85°C unterstützt.

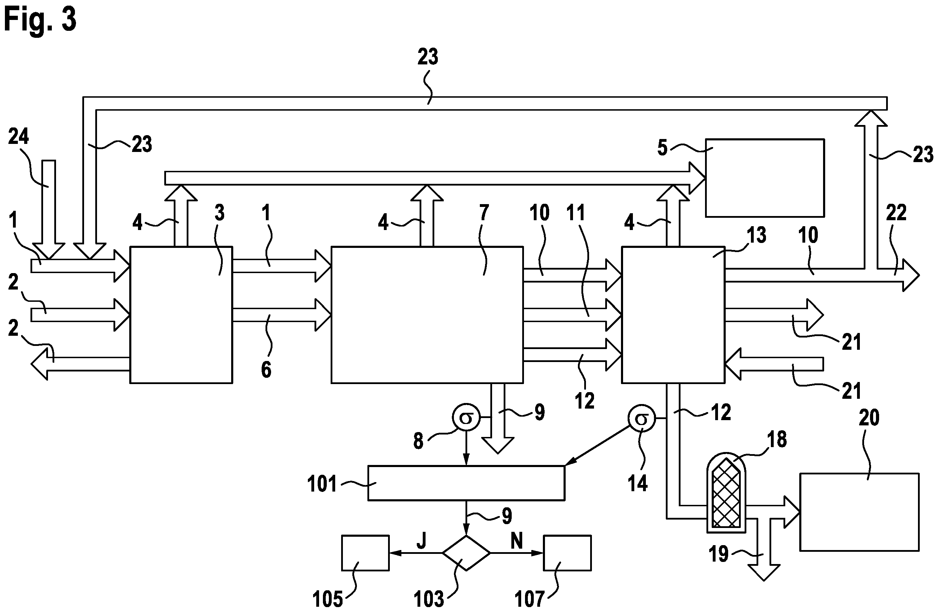

Die Figur 3 zeigt ein Blockschaltbild mit Möglichkeit zur Überprüfung der Funktionalität der Integrität der Membranen 30. Hierbei sind Prüfeinheiten bzw. Sensoren 8, 14 vorhanden, in die WFI zuführbar ist und mindestens eine Messgröße überwacht werden kann. Bevorzugt sind dies die elektrische Leitfähigkeit oder der spezifische elektrische Widerstand. In die Speisewasser-Leitung 1 wird nun über eine Einleitung 24 eine Testlösung hoher elektrischer Leitfähigkeit bzw. geringem spezifischen elektrischen Widerstands eingeleitet und die elektrische Leitfähigkeit bzw. der spezifische elektrische Widerstand an den Messtellen durch entsprechende Sensoren 8, 14 in der Drainage-Ableitung 9 und in der WFI- bzw. Destillat-Leitung 12 überwacht. Ein Defekt einer Membran 30 führt zum Durchtritt nicht-verdampften Speisewassers 1 in die Drainage 9 und damit hier zu einem Ausschlag in Messstelle 8. Ein Defekt einer Folie 32 führt zu einem Durchtritt von Speisewasser in das WFI und damit zu einem Ausschlag an der Messstelle 14.

Damit kann die Funktionalität der Membranen 30 und/oder Folien 32 überwacht werden, wenn ein vorgebbarer Schwellwert der jeweiligen Messgröße über- bzw. unterschritten worden ist. Ist ein solcher Zustand erkannt worden, wird die Verbindung zum Sammelbehälter 20 für keimfreies Wasser getrennt und das gesamte Produkt in das Abwasser über die Verwurfleitung 19 verworfen. Eine Reinigung der Anlage von biologischen und anorganischen Verunreinigungen kann durch die Einleitung 24 von geeigneter Basen und Säuren erreicht werden. Für die Vermeidung von anorganischen Ablagerungen und zur Erhöhung der Lebensdauer der Anlage kann das Speisewasser verschiedenen Vorbehandlungen unterzogen werden.

Figur 3 zeigt den Betriebsmodus der Integritätsprüfung der Membranen 30 mit den zumindest teilweise benötigten Komponenten. Über eine Zuleitung 24 gelangt eine Testlösung in die Speisewasser-Zuleitung 1. Bei der Testlösung handelt es sich beispielsweise um eine Kochsalzlösung. Die Sensoren bzw. Messsonden 8, 14 ermitteln beispielsweise die Leitfähigkeit bzw. den spezifischen Widerstand der Drainage bzw. des Destillats, Schritt 101. Eine Steuerung detektiert ein Überschreiten eines Grenzwerts, Schritt 103. Wenn der Grenzwert überschritten ist, besteht keine Membranintegrität, Schritt 105. Die Membran 30 ist beschädigt. Andernfalls ist die Membranintegrität erfüllt, Schritt 107. Bei der Betriebsart der Figur 3 ist das Heizelement 16 nicht mehr notwendig. Somit unterbleibt auch eine Rezirkulation des Destillats. Vielmehr gelangt das Destillat direkt von dem Kondensator 13 an den Filter 18 und anschließend in den Tank 20.

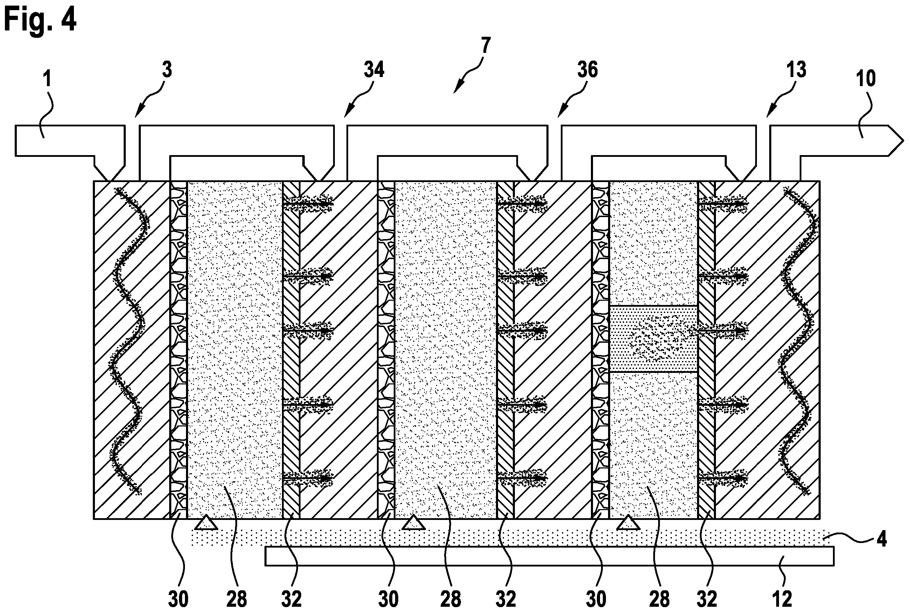

Figur 4 zeigt das Prinzip des zugrunde liegenden Prozesses der an sich beispielsweise aus der EP 2427263 B1 bekannten Membrandestillation. Speisewasser 1 wird in einem Dampferzeuger 3 erhitzt und gelangt über eine Membran 30 zu einem ersten Effekt 34. Bei der Membran 30 handelt es sich um eine semipermeable, hydrophobe Membran 30. Der erste Effekt 34 besteht aus einer alternierende Abfolge von Membranrahmen (Membranen 30), Leerrahmen und Folienrahmen (Kondensationsfläche wie beispielsweise Folien 32). Hier kondensiert der Heizdampf an den Kondensationsflächen, beispielsweise den Folien 32, aus und erwärmt dadurch das Speisewasser 1, welches dadurch an den Membranen 30 zu Reindampf verdampft. Dieser wird zum nächsten Effekt geleitet und kondensiert an den Folien 32 zu WFI aus und heizt das Feed, damit ein weiterer Teil an den Membranen 30 verdampft werden kann. Dieser Vorgang läuft parallel in vielen Rahmen ab und wiederholt sich bis zum letzten Effekt 36. Im Kondensator 13 befindet sich eine alternierende Abfolge an Leer-und Folienrahmen (Folien), welche gekühlt werden, um den restlichen Reindampf zu kondensieren.

## Patentansprüche

1. Anordnung für die Bereitstellung von keimfreiem Wasser für Injektionszwecke, bei der eine Einrichtung (5) für eine Einhaltung eines unterhalb des Atmosphärendrucks liegenden Innendrucks in einer Kammer (28) zur Herabsetzung des Siedepunkts von Speisewasser, eine Einrichtung (2) zur Erwärmung von Speisewasser bis oberhalb der Siedetemperatur innerhalb einer Kammer (28) vorhanden sind und die Kammer (28); und in der Kammer (28) mindestens eine für Flüssigkeit undurchlässige Membran (30) und in einem Abstand zur Membran (30) eine Kondensationsfläche, insbesondere eine Folie (32) oder Platte, angeordnet ist, an der Wasserdampf, der durch die Membran (30) permeiert ist, kondensiert, wobei der an der Kondensationsfläche kondensierte Wasserdampf aus der Kammer (28) über einen Abfluss oder eine Leitung (12) als keimfreies Wasser für Injektionszwecke entfernbar ist, **dadurch gekennzeichnet, dass** zumindest ein Abfluss zum Entfernen von Drainage, die vor Erreichen der Kondensationsfläche (32) bereits in der Kammer (28) kondensiert, aus der Kammer (28) vorgesehen ist, wobei der Abfluss zum Entfernen von Drainage eine Drainage-Leitung (9) aufweist, in welcher zur Detektion einer Beschädigung der Membran (30) ein Sensor (8) zur Ermittlung der elektrischen Leitfähigkeit und/oder des spezifischen elektrischen Widerstands der Drainage vorgesehen ist.

2. Anordnung nach Anspruch 1, **dadurch gekennzeichnet, dass** zumindest eine elektronische Steuerung (40) so ausgebildet ist, dass vor jeder Inbetriebnahme und/oder in vorgebbaren Zeitabständen eine Erwärmung der gesamten Anordnung im Inneren der Kammer (28) auf eine Temperatur von mindestens 85 °C erreichbar ist.

3. Anordnung nach einem der vorhergehenden Ansprüche, **dadurch gekennzeichnet, dass** an zumindest einer Leitung (9, 10, 12) für keimfreies Wasser und/oder Konzentrat und/oder in einem Kondensator (13) und/oder in einem Kühlkreislauf (21) und/oder in einer Sammelleitung für keimfreies Wasser und/oder in einem Heizkreislauf zumindest ein Sensor vorgesehen ist, insbesondere zur Überwachung der Temperatur.

4. Anordnung nach einem der vorhergehenden Ansprüche, **dadurch gekennzeichnet, dass** bei mit dem Sensor (8) detektiertem Unterschreiten oder Überschreiten eines vorgebbaren Schwellwertes zur Anzeige eines Defektes ein akustisches und/oder optisches Signal generierbar ist und/oder ein Warnsignal der elektronischen Steuerung (40) zuführbar ist.

5. Anordnung nach einem der vorhergehenden Ansprüche, **dadurch gekennzeichnet, dass** in der Leitung (12), einer Sammelleitung oder einem internen Sammelbehälter, in dem/der ein Druck unterhalb des Atmosphärendrucks eingehalten ist, enthaltenes keimfreies Wasser für Injektionszwecke mittels einer Pumpe durch ein Filterelement (18) in einen weiteren externen Sammelbehälter (20) für keimfreies Wasser für Injektionszwecke, in dem Atmosphärendruck eingehalten ist, förderbar ist.

6. Anordnung nach Anspruch 5, **dadurch gekennzeichnet, dass** das Filterelement (18) so ausgebildet ist, dass eine zusätzliche Sterilisation und/oder Entkeimung erreichbar ist.

7. Anordnung nach einem der vorhergehenden Ansprüche, **dadurch gekennzeichnet, dass** in der Leitung (12), einer Sammelleitung oder einem internen Sammelbehälter für keimfreies Wasser, in dem/der ein Druck unterhalb des Atmosphärendrucks eingehalten ist, enthaltenes keimfreies Wasser für Injektionszwecke über eine Leitung (15) einem Heizelement (16) bzw. einem Heizkreislauf (2) zum Zwecke der Aufheizung zuführbar ist.

8. Anordnung nach einem der vorhergehenden Ansprüche, **dadurch gekennzeichnet, dass** an zumindest der Leitung (12) für keimfreies Wasser zumindest eine Rückleitung (17) angeschlossen ist, über die Wasser während Zeiträumen, innerhalb derer eine auf mindestens 85 °C erhöhte Temperatur in der Kammer (28) eingehalten ist, Wasser für Injektionszwecke in die Einrichtung (7) zur Membrandestillation rückführbar ist.

9. Anordnung nach einem der vorhergehenden Ansprüche, **dadurch gekennzeichnet, dass** in einer Zuleitung (1), vorzugsweise der Speisewasser-Zuleitung, eine Testlösung hohe elektrische Leitfähigkeit einspeisbar ist, insbesondere mittels einer Dosiereinrichtung.

10. Anordnung nach Anspruch 9, **dadurch gekennzeichnet, dass** eine Vorbehandlung des Speisewassers, das über die Zuleitung (1) zuführbar ist, erfolgt.

11. Anordnung nach einem der vorhergehenden Ansprüche, **dadurch gekennzeichnet, dass** keimfreies Wasser für Injektionszwecke einem Sensor (14) zuführbar ist, durch den mindestens eine Messgröße, bevorzugt eine elektrische Leitfähigkeit oder ein spezifische elektrische Widerstand überprüfbar ist, zur Überwachung der Funktionalität der Membran (30) und/oder bei Über-oder Unterschreiten eines Schwellwertes der Messgröße das erzeugte keimfreie Wasser für Injektionszwecke über eine Verwurfleitung (19) abführbar ist.

12. Anordnung nach einem der vorhergehenden Ansprüche, **dadurch gekennzeichnet, dass** an einer Ableitungeines Konzentrats eine Rezirkulationsleitung (23) angeschlossen ist, über die zumindest Anteile des Konzentrats, insbesondere zum Erreichen eines hohen Rückgewinnungsverhältnisses, in die Zuleitung (1) für das Speisewasser rückführbar sind.

13. Anordnung nach einem der vorhergehenden Ansprüche, **dadurch gekennzeichnet, dass** an dem Dampferzeuger (3) und/oder der Einrichtung (7) zur Membrandestillation und/oder am Kondensator (13) Abflüsse zur Restentleerbarkeit der Anordnung vorgesehen sind.

## Claims

1. An arrangement for providing sterile water for injection purposes, the arrangement comprising a device (5) for maintaining the chamber (28) at an inner pressure that is less than atmospheric pressure in order to reduce a boiling point of feed water, a device (2) for heating the feed water above the boiling point within the chamber (28), and further comprising the chamber (28), wherein the chamber (28) is equipped with at least one membrane (30) which is impermeable for liquids, and a condensation surface (32), in particular a film (32) or a plate, which is arranged at a distance from the at least one membrane (30), wherein steam which has permeated through the at least one membrane (30) is condensed on the condensation surface (32), wherein the steam that has condensated on the condensation surface (32) is removable via a drain or conduit (12) as sterile water for injection purposes, **characterized in that** at least one drain is provided for removing drainage which has condensed in the chamber (28) prior to reaching the condensation surface (32) from the chamber (28), wherein the drain for removing drainage comprises a drainage line (9) in which - for detection of damage to the membrane (30) - a sensor is arranged for determining the electric conductivity and/or the specific electrical resistance of the drainage.

2. The arrangement according to claim 1, **characterized in that** at least one electronic controller (40) is configured for heating the entire arrangement in an interior of the chamber (28) to a temperature of at least 85 °C before each start-up and/or at predeterminable time intervals.

3. The arrangement according to one of the preceding claims, **characterized in that** at least one sensor is provided, in particular a sensor to monitor the temperature, the sensor being arranged at at least one line (9, 10, 12) for sterile water and/or concentrate and/or in a condenser (13) and/or in a cooling circuit (21) and/or in a collection line for sterile water and/or in a heating circuit.

4. The arrangement according to one of the preceding claims, characterized the at least one sensor (8) is configured to detect whether a predeterminable threshold value is undershot or exceeded, wherein, when the at least one sensor detects that the predeterminable threshold value is undershot or exceeded, an acoustic and/or optical signal can be generated and/or a warning signal is supplied to the at least one electronic controller (40) in order to indicate a defect.

5. The arrangement according to one of the preceding claims, **characterized in that** sterile water for injection purposes contained in the first outlet (12), in a collection line or in an internal collection tank for sterile water, in which a pressure is maintained below the atmospheric pressure, is conveyable by means of a pump through a filter element (18) into a further external collection tank (20) for sterile water for injection purposes, in which atmospheric pressure is maintained.

6. The arrangement according to claim 5, **characterized in that** the filter element (18) is configured to provide an additional sterilization and/or disinfection.

7. The arrangement according to one of the preceding claims, **characterized in that** sterile water for injection purposes contained in the first outlet (12), in a collection line or in an internal collection tank for sterile water, in which a pressure is maintained below the atmospheric pressure, is conveyable via a conduit (15) to a heating element (16) or respectively to a heating circuit (2) for the purpose of being heated.

8. The arrangement according according to one of the preceding claims, **characterized in that** at least one return line (17) is connected to at least the line (12) for sterile water, wherein via the return line (17) water for injection purposes is returnable into the device (7) for membrane distillation during periods of time within which a temperature raised to at least 85 °C is maintained in the chamber (28).

9. The arrangement according according to one of the preceding claims, **characterized in that** a test solution of high electric conductivity can be supplied in a supply line (1), preferably a feed water supply line, in particular by means of a metering device.

10. The arrangement according to claim 9, **characterized in** pretreating the feed water, which can be supplied via the supply line (1).

11. The arrangement according according to one of the preceding claims, **characterized in that** sterile water for injection purposes can be supplied to a sensor (14), by means of which at least one measured variable, preferably an electrical conductivity or a specific electrical resistance, can be observed, for monitoring the functionality of the membrane (30) and/or when a threshold value of the at least one measured variable has been exceeded or undershot, the generated sterile water for injection purposes can be discharged via a discard line (19).

12. The arrangement according according to one of the preceding claims, **characterized in that** a recirculation line (23) is connected to a discharge line of a concentrate, wherein the recirculation line is configured to return at least portions of the concentrate, in particular for achieving a high recovery ratio, into the supply line (1) for the feed water.

13. The arrangement according according to one of the preceding claims, **characterized in that** outlets are provided for ease of discharge of residues of the arrangement at a steam generator (3) and/or at the device (7) for membrane distillation and/or at the condenser (13).

## Revendications

1. Système pour fournir de l'eau stérile injectable, dans lequel sont présents un dispositif (5) pour appliquer une pression interne située en dessous de la pression atmosphérique dans une chambre (28) afin de réduire le point d'ébullition de l'eau d'alimentation, un dispositif (2) pour chauffer l'eau d'alimentation jusqu'au-dessus de la température d'ébullition dans une chambre (28), et la chambre (28) ; et au moins une membrane imperméable aux liquides (30) est agencée dans la chambre (28) et une surface de condensation, en particulier une feuille (32) ou une plaque, est agencée à distance de la membrane (30), au niveau de laquelle la vapeur d'eau qui traverse la membrane (30) est imprégnée, condensée, dans lequel la vapeur d'eau condensée au niveau de la surface de condensation peut être évacuée de la chambre (28) via une sortie ou une conduite (12) en tant qu'eau stérile injectable, **caractérisé en ce qu'**au moins une sortie est prévue pour évacuer le drainage, qui s'est déjà condensé dans la chambre (28) avant d'atteindre la surface de condensation (32), hors de la chambre (28), dans laquelle la sortie pour évacuer le drainage présente une conduite de drainage (9), dans laquelle pour détecter une détérioration de la membrane (30), un capteur (8) est prévu pour déterminer la conductivité électrique et/ou la résistivité électrique spécifique du drainage.

2. Système selon la revendication 1, **caractérisé en ce qu'**au moins une commande électronique (40) est réalisée de telle sorte qu'avant chaque mise en service et/ou à des intervalles de temps prédéfinis, un chauffage de tout le système à l'intérieur de la chambre (28) à une température d'au moins 85°C est réalisable.

3. Système selon l'une des revendications précédentes, **caractérisé en ce qu'**au moins un capteur est prévu au niveau d'au moins une conduite (9, 10, 12) pour de l'eau stérile et/ou du concentré et/ou dans un condenseur (13) et/ou dans un circuit de refroidissement (21) et/ou dans une conduite collectrice pour de l'eau stérile et/ou dans un circuit de chauffage, en particulier pour la surveillance de la température.

4. Système selon l'une quelconque des revendications précédentes, **caractérisé en ce que** lorsque le capteur (8) détecte un dépassement vers le bas ou vers le haut d'une valeur de seuil prédéfinissable pour indiquer un défaut, un signal acoustique et/ou optique peut être généré et/ou un signal d'avertissement peut être envoyé à la commande électronique (40).

5. Système selon l'une quelconque des revendications précédentes, **caractérisé en ce que** l'eau stérile injectable contenue dans la conduite (12), une conduite collectrice ou un réservoir collecteur interne, où une pression située en dessous de la pression atmosphérique est maintenue, peut être transportée au moyen d'une pompe à travers un élément filtrant (18) dans un réservoir collecteur externe supplémentaire (20) pour de l'eau stérile injectable, où la pression atmosphérique est maintenue.

6. Système selon la revendication 5, **caractérisé en ce que** l'élément filtrant (18) est réalisé de telle sorte qu'une stérilisation et/ou une désinfection supplémentaire est possible.

7. Système selon l'une des revendications précédentes, **caractérisé en ce que** l'eau stérile contenue dans la conduite (12), dans une conduite de collecte ou dans un réservoir de collecte interne pour de l'eau stérile, où une pression située en dessous de la pression atmosphérique est maintenue, peut être amenée via une conduite (15) à un élément chauffant (16) ou à un circuit de chauffage (2) à des fins de chauffage.

8. Système selon l'une quelconque des revendications précédentes, **caractérisé en ce qu'**au moins une conduite de retour (17) est raccordée à au moins la conduite (12) pour de l'eau stérile, via laquelle l'eau injectable peut être recyclée dans le dispositif (7) de distillation à membrane injectables pendant des périodes pendant lesquelles une température élevée d'au moins 85°C est maintenue dans la chambre (28).

9. Système selon l'une des revendications précédentes, **caractérisé en ce qu'**une solution de test à conductivité électrique élevée peut être injectée dans une conduite d'alimentation (1), de préférence dans la conduite d'alimentation d'eau d'alimentation, en particulier au moyen d'un dispositif de dosage.

10. Système selon la revendication 9, **caractérisé en ce qu'**a lieu un prétraitement de l'eau d'alimentation, qui peut être amenée par l'intermédiaire de la conduite d'alimentation (1).

11. Système selon l'une des revendications précédentes, **caractérisé en ce que** de l'eau stérile injectable peut être amenée à un capteur (14), par lequel au moins une grandeur de mesure, de préférence une conductivité électrique ou une résistance électrique spécifique, peut être vérifiée, pour surveiller la fonctionnalité de la membrane (30) et/ou, en cas de dépassement vers le haut ou vers le bas d'une valeur de seuil de la grandeur de mesure, l'eau stérile injectable produite peut être évacuée par une conduite de rejet (19).

12. Système selon l'une des revendications précédentes, **caractérisé en ce qu'**une conduite de recirculation (23) est raccordée à une conduite d'évacuation d'un concentré, par l'intermédiaire de laquelle au moins des parties du concentré, en particulier pour obtenir un rapport de récupération élevé, peuvent être recyclées dans la conduite d'alimentation (1) de l'eau d'alimentation.

13. Système selon l'une quelconque des revendications précédentes, **caractérisé en ce que** des sorties sont prévus au niveau du générateur de vapeur (3) et/ou du dispositif (7) de distillation par membrane et/ou au niveau du condensateur (13) pour vider les résidus du système.
